(19) Europäisches Patentamt
European Patent Office
Office européen des brevets

(11) **EP 4 376 152 A1**

(12) **EUROPEAN PATENT APPLICATION**
published in accordance with Art. 153(4) EPC

(43) Date of publication:
**29.05.2024 Bulletin 2024/22**

(21) Application number: **22869787.6**

(22) Date of filing: **26.08.2022**

(51) International Patent Classification (IPC):
$H01M\ 10/0585^{(2010.01)}$  $H01M\ 4/485^{(2010.01)}$
$H01M\ 4/505^{(2010.01)}$  $H01M\ 4/525^{(2010.01)}$
$H01M\ 4/62^{(2006.01)}$  $H01M\ 10/0562^{(2010.01)}$

(52) Cooperative Patent Classification (CPC):
H01M 4/485; H01M 4/505; H01M 4/525;
H01M 4/62; H01M 10/0562; H01M 10/0585;
Y02E 60/10

(86) International application number:
**PCT/JP2022/032157**

(87) International publication number:
**WO 2023/042640 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.09.2021 JP 2021149105**

(71) Applicant: **Maxell, Ltd.**
**Kyoto 618-8525 (JP)**

(72) Inventors:
• **FURUKAWA, Kazuki**
  **Otokuni-gun, Kyoto 618-8525 (JP)**
• **SATO, Yuta**
  **Otokuni-gun, Kyoto 618-8525 (JP)**

(74) Representative: **Diehl & Partner**
**Patent- und Rechtsanwaltskanzlei mbB**
**Erika-Mann-Straße 9**
**80636 München (DE)**

(54) **BATTERY AND USAGE METHOD FOR SAME, AND BATTERY SYSTEM**

(57) Provided are a battery that can exhibit excellent load characteristics and charge-discharge cycle characteristics, and a method for using the battery and a battery system that can improve the load characteristics and the charge-discharge cycle characteristics of the battery. A battery of an aspect of the present invention relates to Sustainable Development Goals 12, 3, 7, and 11.

A battery of an aspect of the present invention includes a plurality of unit electrode bodies that each includes a positive electrode and a negative electrode. Alternatively, a battery of another aspect of the present invention includes a bipolar electrode that includes a positive electrode, a negative electrode, and a current collector that is interposed between the positive electrode and the negative electrode. At least one of the positive electrode and the negative electrode contains a material having a spinel structure or a material having an olivine structure as an active material. The battery is to be used in a system that charges the battery so that a ratio of $Q_{obs}$ to $Q_{the}$: $(Q_{obs}/Q_{the}) \times 100$ is 60 to 90%, where $Q_{obs}$ represents a charging capacity per mass of the active material of the at least one of the positive electrode and the negative electrode and is determined by a specific formula, and $Q_{the}$ represents a theoretical capacity of the at least one of the positive electrode and the negative electrode and is determined by a specific formula.

FIG. 1

**Description**

Technical Field

The present invention relates to a battery that can exhibit excellent load characteristics and charge-discharge cycle characteristics, and a method for using the battery and a battery system that can improve the load characteristics and charge-discharge cycle characteristics of the battery.

Background Art

Various primary batteries and secondary batteries are currently used as, e.g., power sources of various equipment. Providing various batteries for society can contribute to achieving Goal 12 (to ensure sustainable consumption and production patterns), Goal 3 (to ensure healthy lives and promote well-being for all at all ages), Goal 7 (to ensure access to affordable, reliable, sustainable and modern energy for all), and Goal 11 (to make cities and human settlements inclusive, safe, resilient and sustainable) among 17 Sustainable Development Goals (SDGs) established by the United Nations.

Some of such primary batteries and secondary batteries conventionally include a wound electrode body in which a positive electrode and a negative electrode are stacked and spirally wound with a separator interposed therebetween, or a stacked electrode body that includes a positive electrode and a negative electrode.

Further, a battery in which a plurality of such stacked electrode bodies as described above is stacked on top of each other is being developed. For example, Patent Document 1 proposes a bipolar battery including at least one bipolar electrode in which a positive electrode active material layer is formed on one surface of a collector, and a negative electrode active material layer is formed on another surface of the collector, and at least one electrolyte layer placed between the bipolar electrodes. Any one of the positive electrode active material layer and the negative electrode active material layer is made of a changeable electrode active material (once a maximum charging capacity of the changeable electrode active material is almost reached, a change in voltage of the changeable electrode active material becomes greater than that before the maximum charging capacity thereof is almost reached), and the other is made of an unchangeable electrode active material (even when the maximum charging capacity of the changeable electrode active material is almost reached, a voltage of the unchangeable electrode active material is almost the same as that before the maximum charging capacity of the changeable electrode active material is almost reached). The bipolar battery taught in Patent Document 1 has a construction in which a plurality of single cell layers (electrode bodies) is connected in series.

As one characteristic of the bipolar battery taught in Patent Document 1, the bipolar battery is capable of charging each of the single cell layers without variations. In Patent Document 1, the single cell layers each include an electrode (e.g., a positive electrode) containing the changeable electrode active material and an electrode (e.g., a negative electrode) containing the unchangeable electrode active material. This configuration allows the charging rate of the respective electrodes containing the changeable electrode active material to be 100%, and thus can prevent charge variations among the single cell layers, which can also prevent overcharge of the single cell layers.

Prior Art Document

Patent Document

Patent Document 1: JP-A-2004-171955 (e.g., Claims and paragraphs [0010] and [0026] to [0029])

Disclosure of Invention

Problem to be Solved by the Invention

Such conventional techniques as described above still leave room for improvement in the load characteristics and charge-discharge cycle characteristics of the battery.

The present invention was made in view of the above-described circumstances, and aims to provide a battery that can exhibit excellent load characteristics and charge-discharge cycle characteristics, and a method for using the battery and a battery system that can improve the load characteristics and charge-discharge cycle characteristics of the battery.

Means for Solving Problem

A battery of an aspect of the present invention includes a plurality of unit electrode bodies. Each unit electrode body includes a positive electrode, a negative electrode, and a solid electrolyte layer or a separator that is interposed between the positive electrode and the negative electrode. A plurality of the unit electrode bodies are stacked on top of each other. Adjacent ones of the unit electrode bodies are connected with each other in series. At least one of the positive electrode and the negative electrode in the unit electrode bodies contains a material having a spinel structure or a material having an olivine structure as an active material. A charger is to be used in a battery system that charges the battery so that a ratio of $Q_{obs}$ to $Q_{the}$: $(Q_{obs}/Q_{the}) \times 100$ is 60 to 90% in the unit electrode bodies, where $Q_{obs}$ represents a charging capacity per mass of the active material of the at least one of the positive electrode and the negative electrode and is determined by the following formula (1), and $Q_{the}$ represents a theoretical capacity of the at least one of the positive electrode and the negative electrode and is determined by the following formula (2).

$$Q_{obs} = Q/AM \quad (1)$$

In formula (1), Q represents a capacity (mAh) of the battery that has been discharged at 0.02 C until a discharge lower-limit voltage is reached, charged by constant-current charging at a current value of 0.2 C until a charging upper-limit voltage is reached, and subsequently charged by constant-voltage charging at the charging upper-limit voltage until the current value reaches 0.02 C, and AM represents the mass (g) of the active material contained in the at least one of the positive electrode and the negative electrode.

$$Q_{the} = F \times 1000/M/3600 \times N \quad (2)$$

In formula (2), F represents the Faraday constant (A ·s/mol) of the active material contained in the at least one of the positive electrode and the negative electrode, M represents a molecular weight (g/mol) of the active material contained in the at least one of the positive electrode and the negative electrode, and N represents the number of reaction electrons of the active material contained in the at least one of the positive electrode and the negative electrode.

A battery of another aspect of the present invention includes a stacked electrode body. The stacked electrode body includes a plurality of positive electrodes, a plurality of negative electrodes, and solid electrolyte layers or separators that are interposed between the positive electrodes and the negative electrodes, respectively. Some of the positive electrodes and some of the negative electrodes with a current collector therebetween constitute a bipolar electrode. At least one of the positive electrode and the negative electrode contains a material having a spinel structure or a material having an olivine structure as an active material. The battery is to be used in a battery system that charges the battery so that a ratio of $Q_{obs}$ to $Q_{the}$: $(Q_{obs}/Q_{the}) \times 100$ is 60 to 90%, where $Q_{obs}$ represents a charging capacity per mass of the active material of the at least one of the positive electrode and the negative electrode and is determined by the above-described formula (1), and $Q_{the}$ represents a theoretical capacity of the at least one of the positive electrode and the negative electrode and is determined by the above-described formula (2).

A battery system of an aspect of the present invention includes the battery of the present invention and a charger. The battery system charges the battery so that $(Q_{obs}/Q_{the}) \times 100$ is 60 to 90%.

In a method for using a battery of an aspect of the present invention, the battery of the present invention is charged so that $(Q_{obs}/Q_{the}) \times 100$ is 60 to 90%, and used.

Effects of the Invention

The present invention can provide a battery that can exhibit excellent load characteristics and charge-discharge cycle characteristics, and a method for using the battery and a battery system that can improve the load characteristics and the charge-discharge cycle characteristics of the battery.

Brief Description of Drawing

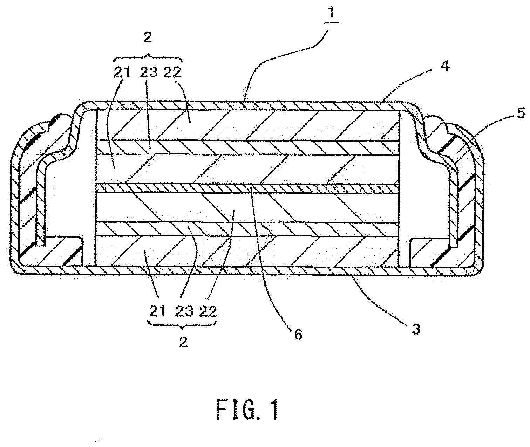

[FIG. 1] FIG. 1 is a cross-sectional view schematically illustrating an exemplary battery of an aspect of the present invention.

Description of the Invention

When a material having the spinel structure or a material having the olivine structure that can be used as an active material of a battery is used as a positive electrode active material, charging the battery makes the material deintercalate ions (e.g., lithium ions) as carriers of the battery. When the amount of the deintercalated ions becomes large to some extent, a rate of change in potential becomes very large. When the material is used as a negative electrode active material, the material intercalates ions (e.g., lithium ions) as carriers of the battery that have been deintercalated from the positive electrode during charging of the battery. When the amount of the intercalated ions becomes large to some extent, a rate of change in potential becomes very large. Such conventional batteries as taught in Patent Document 1 typically use, as a charge end time, a time point at which the phenomenon of significant changes in potential of the positive electrode active material and the negative electrode active material has occurred, to ensure a further larger capacity. In order to suppress the variation in the charging capacity of each electricity generation element of the battery, Patent Document 1 especially teaches a technique of setting the charge end time such that if the positive electrode active material is made of the changeable electrode active material, the positive electrode active material is made to deintercalate as much lithium ions as possible to charge the positive electrode to a charging rate of 100%.

However, an investigation of the present inventors showed that if such a phase is used as the charge end time of the battery, the active material becomes highly resistant as the rate of change in potential of the active material becomes very large, which deteriorates the load characteristics or the charge-discharge cycle characteristics of the battery.

The present invention relates to a battery that includes a plurality of unit electrode bodies. Each unit electrode body includes a positive electrode, a negative electrode, and a solid electrolyte layer or a separator that is interposed between the positive electrode and the negative electrode. A plurality of the unit electrode bodies are stacked on top of each other. Alternatively, the present invention also relates to a battery that includes a plurality of positive electrodes and a plurality of negative electrodes. Some of the positive electrodes and some of the negative electrodes with a current collector therebetween constitute a bipolar electrode. In each of the batteries, the active material of at least one of the positive electrode and the negative electrode is the material whose rate of change in potential increases significantly at the charge end time of the battery, as described above. By regulating the charging conditions of the battery before use within specific ranges, the present invention can suppress the above-described increase in the resistance of the active material, and thus improve the load characteristics and the charge-discharge cycle characteristics of the battery.

A battery of an aspect of the present invention includes a plurality of unit electrode bodies. Each unit electrode body includes a positive electrode, a negative electrode, and a solid electrolyte layer or a separator that is interposed between the positive electrode and the negative electrode. A plurality of the unit electrode bodies are stacked on top of each other. Adjacent ones of the unit electrode bodies are connected with each other in series. At least one of the positive electrode and the negative electrode in the unit electrode bodies contains a material having a spinel structure or a material having an olivine structure as an active material. The battery is to be used in a system that charges the battery so that a ratio of $Q_{obs}$ to $Q_{the}$: $(Q_{obs}/Q_{the}) \times 100$ is 60 to 90% in the unit electrode bodies, where $Q_{obs}$ represents a charging capacity per mass of the active material of the at least one of the positive electrode and the negative electrode and is determined by the following formula (1), and $Q_{the}$ represents a theoretical capacity of the at least one of the positive electrode and the negative electrode and is determined by the following formula (2).

$$Q_{obs} = Q/AM \quad (1)$$

In formula (1), Q represents a capacity (mAh) of the battery that has been discharged at 0.02 C until a discharge lower-limit voltage is reached, charged by constant-current charging at a current value of 0.2 C until a charging upper-limit voltage is reached, and subsequently charged by constant-voltage charging at the charging upper-limit voltage until the current value reaches 0.02 C, and AM represents the mass (g) of the active material contained in the at least one of the positive electrode and the negative electrode.

$$Q_{the} = F \times 1000/M/3600 \times N \quad (2)$$

In formula (2), F represents the Faraday constant (A ·s/mol) of the active material contained in the at least one of the positive electrode and the negative electrode, M represents a molecular weight (g/mol) of the active material contained in the at least one of the positive electrode and the negative electrode, and N represents the number of reaction electrons of the active material contained in the at least one of the positive electrode and the negative electrode.

Values described in various documents such as Chemical Dictionary (Kagaku-Dojin Publishing Company, INC.) can be used as F (the Faraday constant of the active material). N (the number of reaction electrons of the active material) can be estimated from the composition of the active material, and is usually equal to one.

A battery of another aspect of the present invention includes a stacked electrode body. The stacked electrode body includes a plurality of positive electrodes, a plurality of negative electrodes, and solid electrolyte layers or separators that are interposed between the positive electrodes and the negative electrodes, respectively. Some of the positive electrodes and some of the negative electrodes with a current collector therebetween constitute a bipolar electrode. At least one of the positive electrode and the negative electrode contains a material having a spinel structure or a material having an olivine structure as an active material. The battery is to be used in a system that charges the battery so that a ratio of $Q_{obs}$ to $Q_{the}$: $(Q_{obs}/Q_{the}) \times 100$ is 60 to 90%, where $Q_{obs}$ represents a charging capacity per mass of the active material of the at least one of the positive electrode and the negative electrode and is determined by the above-described formula (1), and $Q_{the}$ represents a theoretical capacity of the at least one of the positive electrode and the negative electrode and is determined by the above-described formula (2).

That is, a battery of an aspect of the present invention includes a plurality of unit electrode bodies that includes electrodes that contain a material having a spinel structure or a material having an olivine structure as an active material. Alternatively, a battery of another aspect of the present invention includes at least one bipolar electrode that includes an electrode that contains a material having a spinel structure or a material having an olivine structure as an active material. When a system charges the battery of the present invention, the system restricts the charging rate so that a ratio of $Q_{obs}$ to $Q_{the}$: $(Q_{obs}/Q_{the}) \times 100$ is 90% or less, and preferably 85% or less, where $Q_{obs}$ represents a charging capacity per mass of the active material of the electrodes and is determined by the above-described formula (1), and $Q_{the}$ represents a theoretical capacity of the electrodes and is determined by the above-described formula (2). Thus, the increase in the resistance of the active material is suppressed, and the load characteristics and charge-discharge cycle characteristics of the battery are improved. However, when the charging rate of the battery is excessively restricted, a sufficient capacity cannot be secured. Thus, when a system charges a battery of the present invention, the system increases the charging rate to some extent so that the value of $(Q_{obs}/Q_{the}) \times 100$ is 60% or more, and preferably 65% or more, and the capacity of the battery is secured.

The value of $(Q_{obs}/Q_{the}) \times 100$ of the battery can be regulated by, e.g., selecting the type of the material having the spinel structure or the material having the olivine structure as the active material of the electrodes, selecting the type of the active material of the electrodes that are opposite the electrodes, adjusting the amount of the active material contained in the electrodes and the amount of the active material contained in the electrodes that are opposite the electrodes, and adjusting the charging cutoff voltage of the system.

[Battery]

A battery of an aspect of the present invention is a chargeable secondary battery that includes unit electrode bodies that include positive electrodes and negative electrodes, or a chargeable secondary battery that includes a bipolar electrode that includes a positive electrode and a negative electrode. At least one of the positive electrode and the negative electrode contains the material having the spinel structure or the material having the olivine structure as an active material.

FIG. 1 is a cross-sectional view schematically illustrating an exemplary battery of a battery system of an aspect of the present invention. A battery 1 illustrated in FIG. 1 includes an exterior body and two unit electrode bodies (stacked electrode bodies) 2, 2 that are sealed in the exterior body. The exterior body includes an exterior can 3, a sealing can 4, and an annular gasket 5 that is interposed between the exterior can 3 and the sealing can 4. If the unit electrode body 2 includes a separator 23 that is interposed between a positive electrode 21 and a negative electrode 22, the exterior body also contains a non-aqueous electrolyte (not shown).

The sealing can 4 fits in the opening of the exterior can 3 with the gasket 5 interposed therebetween. The opening edge of the exterior can 3 is tightened inward, so that the gasket 5 is in contact with the sealing can 4 and thus seals the opening of the exterior can 3. Consequently, the inside of the battery has a tightly closed structure.

Each unit electrode body 2 includes the positive electrode 21 and the negative electrode 22 stacked on top of each other with a solid electrolyte layer or the separator 23 interposed therebetween. A current collector 6 is interposed between the positive electrode 21 of the upper unit electrode body 2 in FIG. 1 and the negative electrode 22 of the lower unit electrode body 2 in FIG. 1, so that the two unit electrode bodies 2, 2 are connected with each other in series. In FIG. 2, the sealing can 4 is electrically connected with the negative electrode 22 of the upper unit electrode body 2 and functions as the negative electrode terminal of the battery 1, and the exterior can 3 is electrically connected with the positive electrode 21 of the lower unit electrode body 2 and functions as the positive electrode terminal of the battery 1. For the electrical connection, for example, the inner face of the sealing can 4 is directly in contact with the negative electrode 22 of the upper unit electrode body 2, and the inner face of the exterior can 3 is directly in contact with the positive electrode 21 of the lower unit electrode body 2. The exterior can may function as the negative electrode terminal and the sealing can may function as the positive electrode terminal, depending on, e.g., the intended use of the battery.

As illustrated in FIG. 1, the unit electrode body of the battery includes the positive electrode and the negative electrode, and commonly includes the solid electrolyte layer or the separator that is interposed between the positive electrode and the negative electrode. The positive electrode, the negative electrode, and the solid electrolyte layer or the separator are stacked on top of each other. The battery includes a stacked body that includes a plurality of stacked unit electrode bodies. In the stacked body, adjacent ones of the unit electrode bodies are connected with each other in series.

In the case of a battery that includes a bipolar electrode, the battery includes a stacked electrode body that includes at least one bipolar electrode in which a positive electrode and a negative electrode are stacked on top of each other with a current collector interposed therebetween. If the stacked electrode body includes one bipolar electrode, for example, a typical negative electrode (e.g., a negative electrode that can constitute a unit electrode body of a battery can be used, and the same applies to the "typical negative electrode" described below) is stacked on the positive electrode of the bipolar electrode via a solid electrolyte layer or a separator, and a typical positive electrode (e.g., a positive electrode that can constitute a unit electrode body of a battery can be used, and the same applies to the "typical positive electrode" described below) is stacked on the negative electrode of the bipolar electrode via a solid electrolyte layer or a separator. If the stacked electrode body includes a plurality of bipolar electrodes, for example, a solid electrolyte layer or a separator is interposed between two adjacent bipolar electrodes, the typical negative electrode is stacked on one of two outermost bipolar electrodes with the positive electrode facing outward via a solid electrolyte layer or a separator, and the typical positive electrode is stacked on the other of the two outermost bipolar electrodes with the negative electrode facing outward via a solid electrolyte layer or a separator.

Examples of the battery include a secondary battery that includes a solid electrolyte layer that is interposed between the positive electrode and the negative electrode (all-solid-state secondary battery), and a secondary battery that includes a separator that is interposed between the positive electrode and the negative electrode, and a non-aqueous electrolyte (non-aqueous electrolyte solution or gel-like electrolyte) that contains a solvent (non-aqueous electrolyte secondary battery except the all-solid-state secondary battery).

Examples of carriers of the active material of the battery include lithium ions and sodium ions, but lithium ions are typically used. That is, the electrode of the battery typically contains lithium ions as carriers of various active materials, such as the material having the spinel structure and the material having the olivine structure.

(Positive electrode)

The positive electrode of the battery typically includes a positive electrode mixture that contains a positive electrode active material. The positive electrode may include only a molded body of the positive electrode mixture, or may include a current collector and a layer of the positive electrode mixture molded body (positive electrode mixture layer) that is formed on the current collector.

If the positive electrode mixture of the positive electrode of the battery contains the material having the spinel structure or the material having the olivine structure as the active material, the material having the spinel structure is represented by a general composition formula $Li_{1+y}M_{2-y-z}M^2{}_zO_4$ (where M is at least one element selected from the group consisting of Ni, Co, Mn, and Cr, $M^2$ is at least one element selected from the group consisting of Fe, Co, Ni, Na, Al, Mg, Zr, and Ti, and y satisfies $-0.05 \leq y \leq 0.1$, and z satisfies $0 \leq z \leq 0.5$). Examples of the material having the spinel structure include a lithium manganese oxide represented by $LiMn_2O_4$ and a lithium nickel manganese oxide represented by $LiNi_{0.5}Mn_{1.5}O_4$. One or some of oxygen in these composition formulas may be replaced with fluorine to improve oxidation resistance. Examples of the material having the olivine structure that can be used as the positive electrode active material include lithium-containing complex oxides represented by a general composition formula $LiM^3{}_{1-a}M^4{}_aPO_4$ (where $M^3$ is at least one element selected from the group consisting of Fe, Mn, Ni, and Co, $M^4$ is at least one element selected from the group consisting of Al, Mg, Ti, Zr, Cu, Zn, Ga, Ge, Nb, Mo, Sn, Sb, and Ba, and a satisfies $0 \leq a \leq 0.5$).

If the positive electrode mixture contains the material having the spinel structure or the material having the olivine structure as the active material, the positive electrode mixture may contain only one or two or more of the above-exemplified materials having the spinel structure and materials having the olivine structure.

If the negative electrode of the unit electrode body contains the material having the spinel structure or the material having the olivine structure as the active material, the positive electrode mixture may contain the material having the spinel structure or the material having the olivine structure as the active material or may contain an active material except these materials. Preferable examples of active materials that can be contained in the positive electrode mixture, except the materials having the spinel structure and the materials having the olivine structure, include materials that have a layered structure and are represented by general composition formula (3) described below.

$$Li_{1+x}M^1O_2 \qquad (3)$$

In general composition formula (3), $M^1$ includes at least one element selected from the group consisting of at least Ni, Co, and Mn, and x satisfies $-0.3 \leq x \leq 0.3$.

If element $M^1$ is an element group consisting of three elements of Ni, Co, and Mn, it is preferable that $0.3 \leq b \leq 0.8$, $0.1 \leq c \leq 0.4$, and $0.1 \leq d \leq 0.4$, where b, c, and d are proportions (mol%) of Ni, Co, and Mn, respectively. The element $M^1$ may consist of only Ni, Co, and Mn. In addition to these elements, the element $M^1$ may include at least one element selected from the group consisting of Mg, Ti, Zr, Nb, Mo, W, Al, Si, Ga, Ge, and Sn. The total proportion e of Mg, Ti, Zr, Nb, Mo, W, Al, Si, Ga, Ge, and Sn is preferably 5 mol% or less, and much preferably 1 mol% or less, with respect to 100 mol% of the amount of all the elements of the element $M^1$.

Examples of the active material that may be contained in the positive electrode mixture, except the materials having the spinel structure and the materials having the olivine structure, include lithium cobalt complex oxides that are represented by $Li_{1-x}Co_{1-r}M_rO_2$ (where M is at least one element selected from the group consisting of Al, Mg, Ti, V, Cr, Zr, Fe, Ni, Cu, Zn, Ga, Ge, Nb, Mo, Sn, Sb, and Ba, and x satisfies $0 \leq x \leq 1$ and r satisfies $0 \leq r \leq 0.5$), lithium nickel complex oxides represented by $Li_{1-x}Ni_{1-r}M_rO_2$ (where M is at least one element selected from the group consisting of Al, Mg, Ti, Zr, Fe, Co, Cu, Zn, Ga, Ge, Nb, Mo, Sn, Sb, and Ba, and x satisfies $0 \leq x \leq 1$ and r satisfies $0 \leq r \leq 0.5$), and pyrophosphoric acid compounds represented by $Li_{2-x}M_{1-r}N_rP_2O_7$ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and x satisfies $0 \leq x \leq 2$ and r satisfies $0 \leq r \leq 0.5$).

If the positive electrode mixture contains an active material except the materials having the spinel structure and the materials having the olivine structure, the positive electrode mixture may contain only one or two or more of the above-exemplified various materials. The positive electrode mixture may contain at least one of the above-exemplified materials having the spinel structure and materials having the olivine structure, and at least one of the above-exemplified active materials except the above-exemplified materials having the spinel structure and materials having the olivine structure.

If the battery is an all-solid-state secondary battery, the average particle size of the positive electrode active material is preferably 1 $\mu$m or more, and much preferably 2 $\mu$m or more, and also preferably 10 $\mu$m or less, and much preferably 8 $\mu$m or less. The positive electrode active material may be primary particles or secondary particles constituted by aggregated primary particles. When the positive electrode active material has an average particle size within the above range, the interface between the positive electrode active material and the solid electrolyte contained in the positive electrode is large, and thus the load characteristics of the battery are further improved.

Herein, the average particle size of the various particles (positive electrode active material, solid electrolytes, etc.) means the value of the diameter corresponding to the volume-based cumulative frequency of 50% ($D_{50}$) when the cumulative volume of particles, starting from smaller sizes, is determined using a particle size distribution measuring device, e.g., a microtrac particle size distribution measuring device "HRA9320" manufactured by Nikkiso Co., Ltd.

If the battery is an all-solid-state secondary battery, it is preferable that the positive electrode active material includes a reaction-restricting layer on its surface to restrict the reaction between the positive electrode active material and the solid electrolyte contained in the positive electrode.

When the positive electrode active material is directly in contact with the solid electrolyte in the positive electrode mixture molded body, the solid electrolyte is oxidized and forms a resistance layer, which may decrease the ion conductivity in the molded body. The reaction-restricting layer for restricting the reaction between the positive electrode active material and the solid electrolyte is provided on the surface of the positive electrode active material to prevent the direct contact between the positive electrode active material and the solid electrolyte to thus restrict the decrease in the ion conductivity in the molded body caused by the oxidation of the solid electrolyte.

It is sufficient that the reaction-restricting layer is constituted by a material that has ion conductivity and can restrict the reaction between the positive electrode active material and the solid electrolyte. Examples of the material that can constitute the reaction-restricting layer include oxides that contain Li and at least one element selected from the group consisting of Nb, P, B, Si, Ge, Ti, and Zr. The more specific examples include Nb-containing oxides such as $LiNbO_3$, and $Li_3PO_4$, $Li_3BO_3$, $Li_4SiO_4$, $Li_4GeO_4$, $LiTiO_3$, $LiZrO_3$, and $Li_2WO_4$. The reaction-restricting layer may contain only one or two or more of these oxides, or may contain a composite compound that includes two or more of the oxides. Among these oxides, the Nb-containing oxides are preferable, and $LiNbO_3$ is much preferable.

Preferably, the reaction-restricting layer is present on the surface of the positive electrode active material in an amount of 0.1 to 1.0 part by mass with respect to 100 parts by mass of the positive electrode active material. Within this range, the reaction-restricting layer can restrict well the reaction between the positive electrode active material and the solid electrolyte.

Examples of a method for forming the reaction-restricting layer on the surface of the positive electrode active material include a sol-gel process, mechanofusion, chemical vapor deposition (CVD), physical vapor deposition (PVD), and atomic layer deposition (ALD).

The content of the positive electrode active material in the positive electrode mixture is preferably 60 to 85% by mass in view of the further increase in the energy density of the battery. If the positive electrode active material includes the material having the spinel structure or the material having the olivine structure, the proportion of the material having the spinel structure and the material having the olivine structure in the total amount of the positive electrode active materials in the positive electrode mixture is preferably 75 to 100% by mass.

The positive electrode mixture may contain a conductive assistant. Specific examples of the conductive assistant include carbon materials such as graphite (natural or artificial graphite), graphene, carbon black, carbon nanofibers, and carbon nanotubes. The content of the conductive assistant in the positive electrode mixture is preferably 1.0 to 6.5 parts by mass with respect to 100 parts by mass of the content of the positive electrode active material.

The positive electrode mixture may contain a binder. Specific examples of the binder include fluorocarbon resins such as polyvinylidene fluoride (PVDF). If good moldability can be secured for forming the positive electrode mixture molded body without using the binder, as in the case where the positive electrode mixture contains a sulfide-based solid electrolyte (the detail will be described below), the binder may not be added to the positive electrode mixture.

If the positive electrode mixture contains the binder, the content of the binder is preferably 15% by mass or less and also preferably 0.5% by mass or more. If the positive electrode mixture contains a sulfide-based solid electrolyte and thus the moldability is obtained without the binder, the content of the binder is preferably 0.5% by mass or less, much preferably 0.3% by mass or less, and further preferably 0% by mass (that is, the binder is not contained).

When the battery is an all-solid-state secondary battery, the positive electrode mixture contains a solid electrolyte.

The positive electrode mixture can contain any solid electrolyte that has lithium ion conductivity. Examples of the solid electrolyte that can be contained in the positive electrode mixture include sulfide-based solid electrolytes, hydride-based solid electrolytes, halide-based solid electrolytes, and oxide-based solid electrolytes.

Examples of the sulfide-based solid electrolytes include particles such as $Li_2S$-$P_2S_5$-based glass, $Li_2S$-$SiS_2$-based glass, $Li_2S$-$P_2S_5$-$GeS_2$-based glass, and $Li_2S$-$B_2S_3$-based glass. In addition, thio-LISICON-type sulfide-based solid electrolytes ($Li_{12-12a-b+c+6d-e}M^1_{3+a-b-c-d}M^2_bM^3_cM^4_dM^5_{12-e}X_e$, such as $Li_{10}GeP_2Si_{12}$ and $Li_{9.54}Si_{1.74}P_{1.44}Si_{1.7}Cl_{0.3}$ (where $M^1$ is Si, Ge, or Sn, $M^2$ is P or V, $M^3$ is Al, Ga, Y, or Sb, $M^4$ is Zn, Ca, or Ba, $M^5$ is S or is S and O, and X is F, Cl, Br, or I, and a, b, c, d, and e satisfy $0 \leq a < 3$, $0 \leq b + c + d \leq 3$, and $0 \leq e \leq 3$), which attract attention in recent years due to their high Li-ion conductivity, and argyrodite-type sulfide-based solid electrolytes, which are represented by, e.g., $Li_{7-f+g}PS_{6-x}Cl_{x+y}$, such as $Li_6PS_5Cl$ (where f and g satisfy $0.05 \leq f \leq 0.9$ and $- 3.0f + 1.8 \leq g < - 3.0f + 5.7$) and $Li_{7-h}PS_{6-h}Cl_iBr_j$ (where h, i, and j satisfy $h = i + j$, $0 < h \leq 1.8$, and $0.1 \leq i/j \leq 10.0$) can also be used.

Examples of the hydride-based solid electrolytes include $LiBH_4$, and a solid solution of $LiBH_4$ and the following alkali metal compound (e.g., a solid solution having a mol ratio of $LiBH_4$ to an alkali metal compound of 1:1 to 20:1). Examples of the alkali metal compound in the solid solution include at least one selected from the group consisting of lithium halides (e.g., LiI, LiBr, LiF, and LiCl), rubidium halides (e.g., RbI, RbBr, RbF, and RbCl), cesium halides (e.g., CsI, CsBr, CsF, and CsCl), lithium amide, rubidium amide, and cesium amide.

Examples of the halide-based solid electrolytes include monoclinic $LiAlCl_4$, defective-spinel-type or layered $LiInBr_4$, and monoclinic $Li_{6-3m}Y_mX_6$ (where $0 < m < 2$, and X = Cl or Br). In addition, the known halide-based solid electrolytes disclosed in WO 2020/070958 and WO 2020/070955 may be used.

Examples of the oxide-based solid electrolytes include garnet-type $Li_7La_3Zr_2O_{12}$, NASICON-type $Li_{1+O}Al_{1+O}Ti_{2-O}(PO_4)_3$ and $Li_{1+p}Al_{1+p}Ge_{2-p}(PO_4)_3$, and perovskite-type $Li_{3q}La_{2/3-q}TiO_3$.

Among these solid electrolytes, the sulfide-based solid electrolytes are preferable, and the sulfide-based solid electrolytes that contain Li and P are much preferable since they have high lithium ion conductivity. In particular, the argyrodite-type sulfide-based solid electrolytes, which have higher lithium ion conductivity and are chemically more stable, are further preferable.

The average particle size of the solid electrolyte is preferably 0.1 $\mu$m or more, and much preferably 0.2 $\mu$m or more, in view of reduction of the grain boundary impedance. On the other hand, the average particle size of the solid electrolyte is preferably 10 $\mu$m or less, and much preferably 5 $\mu$m or less, in view of formation of sufficient contact interface between the active material and the solid electrolyte.

The content of the solid electrolyte in the positive electrode mixture is preferably 10 parts by mass or more, and much preferably 30 parts by mass or more, with respect to 100 parts by mass of the content of the positive electrode active material, in view of the further increase in the ion conductivity in the positive electrode for further improving the output characteristics of the battery. However, an excessively large amount of the solid electrolyte in the positive electrode mixture decreases the amounts of other components. Thus, the effects of these components may decrease. Therefore, the content of the solid electrolyte in the positive electrode mixture is preferably 65 parts by mass or less, and much preferably 60 parts by mass or less, with respect to 100 parts by mass of the content of the positive electrode active material.

A current collector may be added to the positive electrode. The current collector may be: a foil, a punched metal, a net, an expanded metal, or a metal foam made of metal such as aluminum or stainless steel; or a carbon sheet.

The positive electrode mixture molded body can be formed by, e.g., mixing the positive electrode active material with the conductive assistant, the binder, the solid electrolyte, etc., which are added as necessary, to prepare a positive electrode mixture, and compressing the positive electrode mixture by, e.g., pressure molding.

If the current collector is added to the positive electrode, the positive electrode can be manufactured by sticking the positive electrode mixture molded body that is formed using such a method as described above, to the current collector by, e.g., pressure joining.

The positive electrode mixture molded body may be formed by mixing the above positive electrode mixture with a solvent to prepare a positive electrode mixture-containing composition, applying the composition on a substrate such as the current collector or the solid electrolyte layer that will face the positive electrode, drying the applied composition, and then pressing the dried composition.

Examples of the solvent for the positive electrode mixture-containing composition include water and organic solvents such as N-methyl-2-pyrrolidone (NMP). If the solid electrolyte is also added to the positive electrode mixture-containing composition, a solvent that is less likely to degrade the solid electrolyte is preferable. Since the sulfide-based solid electrolyte and the hydride-based solid electrolyte cause a chemical reaction in the presence of a minute amount of water, nonpolar aprotic solvents, which are represented by hydrocarbon solvents such as hexane, heptane, octane, nonane, decane, decalin, toluene, and xylene are preferable. In particular, a super-dehydrated solvent that contains 0.001% by mass (10 ppm) or less of water is much preferable. Further, fluorine-based solvents such as "VERTREL (registered trademark)" manufactured by DU PONT-MITSUI FLUOROCHEMICALS COMPANY Ltd., "ZEORORA (registered trademark)" manufactured by ZEON CORPORATION, and "NOVEC (registered trademark)" manufactured by SUMITOMO 3M LIMITED, and also non-aqueous organic solvents such as dichloromethane and diethyl ether can be used.

It is much preferable to compressively mold the positive electrode mixture by, e.g., pressure molding to form the positive electrode mixture molded body, in view of the increase in the density of the molded body for the decrease in the porosity and the resulting further decrease in the internal resistance of the positive electrode.

A bipolar electrode may be produced by forming the positive electrode mixture molded body (positive electrode mixture layer) on one side of the current collector using such a technique as described above, and forming the negative electrode mixture molded body (negative electrode mixture layer) on the other side of the current collector using a method described below or sticking, e.g., a lithium sheet or a lithium alloy sheet on the other side of the current collector.

The current collector that is interposed between the positive electrode and the negative electrode of the bipolar electrode may preferably be a sheet of stainless steel, such as SUS304, SUS310, or SUS316, or a carbon sheet (the content of carbon is 80% by mass or more).

Although the thickness of the positive electrode mixture molded body is ordinarily 50 μm or more, the thickness is preferably 200 μm or more in view of the increase in the capacity of the battery. The thickness of the positive electrode mixture molded body is ordinarily 1000 μm or less. The thickness is preferably 500 μm or less in view of the further improvement in the load characteristics of the battery.

The positive electrode may be manufactured by forming the positive electrode mixture layer composed of the positive electrode mixture molded body on the current collector using the positive electrode mixture-containing composition to which the solvent is added. In this case, the thickness of the positive electrode mixture layer is preferably 50 to 1000 μm, and much preferably 500 μm or less, in view of the further improvement in the load characteristics of the battery.

(Negative electrode)

The negative electrode of the battery includes, e.g., a molded body of a negative electrode mixture that contains a negative electrode active material, or a lithium sheet or a lithium alloy sheet.

The negative electrode that includes the molded body of the negative electrode mixture that contains the negative electrode active material may be a molded body (e.g., pellet) formed by molding the negative electrode mixture. Alternatively, the negative electrode may include a current collector and a layer of the negative electrode mixture molded body (negative electrode mixture layer) that is formed on the current collector.

If the negative electrode includes the negative electrode mixture molded body and contains the material having the spinel structure or the material having the olivine structure as the active material, examples of the active material include lithium titanium oxides represented by general composition formula (4) below.

$$Li[Li_{1/3-t}M^5_t Ti_{5/3-u}M^6_u]O_4 \qquad (4)$$

In general formula (4), $M^5$ is at least one element selected from the group consisting of Na, Mg, K, Ca, Sr, and Ba, $M^6$ is at least one element selected from the group consisting of Al, V, Cr, Fe, Co, Ni, Zn, Ym, Zr, Nb, Mo, Ta, and W, and t satisfies $0 \leq t < 1/3$ and u satisfies $0 \leq u < 5/3$.

If the positive electrode of the unit electrode body contains the material having the spinel structure or the material having the olivine structure as the active material, the negative electrode mixture may contain the material having the spinel structure or the material having the olivine structure as the active material or may contain an active material except these materials. Examples of the active material that can be contained in the negative electrode mixture, except the materials having the spinel structure and the materials having the olivine structure, include carbon materials such as graphite, simple substances and compounds (e.g., oxides) that include elements such as Si and Sn and alloys thereof, titanium oxides such as $TiO_2$, niobium oxides such as $Nb_2O_5$, tungsten oxides such as $WO_3$, and complex oxides constituted by titanium, niobium, and tungsten. Further, lithium metal and lithium alloys (such as a lithium-aluminum alloy and a lithium-indium alloy) can be used as the negative electrode active material.

If the negative electrode mixture contains an active material except the materials having the spinel structure and the materials having the olivine structure, the negative electrode mixture may contain only one or two or more of the above-exemplified various materials. The negative electrode mixture may contain at least one of the above-exemplified materials having the spinel structure and materials having the olivine structure, and at least one of the above-exemplified active materials except the above-exemplified materials having the spinel structure and materials having the olivine structure.

The content of the negative electrode active material in the negative electrode mixture is preferably 40 to 80% by mass in view of the further increase in the energy density of the battery. If the negative electrode active material includes the material having the spinel structure or the material having the olivine structure, the proportion of the material having the spinel structure and the material having the olivine structure in the total amount of the negative electrode active materials in the negative electrode mixture is preferably 75 to 100% by mass.

The negative electrode mixture may contain a conductive assistant. Specific examples of the conductive assistant include the above-exemplified conductive assistants that the positive electrode mixture can contain. The content of the conductive assistant in the negative electrode mixture is preferably 10 to 30 parts by mass with respect to 100 parts by mass of the content of the negative electrode active material.

The negative electrode mixture may contain a binder. Specific examples of the binder include the above-exemplified binders that the positive electrode mixture can contain. If good moldability can be secured for forming the negative electrode mixture molded body without using the binder, as in the case where the negative electrode mixture contains a sulfide-based solid electrolyte (the detail will be described below), the binder may not be added to the negative electrode mixture.

When the negative electrode mixture contains the binder, the content of the binder is preferably 15% by mass or less and also preferably 0.5% by mass or more. When the negative electrode mixture contains a sulfide-based solid electrolyte and thus the moldability is obtained without the binder, the content of the binder is preferably 0.5% by mass or less, much preferably 0.3% by mass or less, and further preferably 0% by mass (that is, the binder is not contained).

When the battery is an all-solid-state secondary battery, the negative electrode that includes the molded body of the negative electrode mixture contains a solid electrolyte in the negative electrode mixture. Specific examples of the solid electrolyte include the above-exemplified solid electrolytes that the positive electrode mixture can contain. Among the above-exemplified solid electrolytes, the sulfide-based solid electrolytes are preferable, and the sulfide-based solid electrolytes that have the argyrodite crystal structure are much preferable because they have a high lithium ion conductivity and have a function of increasing the moldability of the negative electrode mixture.

The average particle size of the solid electrolyte of the negative electrode mixture is preferably 0.1 $\mu$m or more, and much preferably 0.2 $\mu$m or more, and also preferably 10 $\mu$m or less, and much preferably 5 $\mu$m or less, for the same reason as that for the positive electrode mixture.

The content of the solid electrolyte in the negative electrode mixture is preferably 30 parts by mass or more, and much preferably 40 parts by mass or more, with respect to 100 parts by mass of the content of the negative electrode active material, in view of the further increase in the ion conductivity in the negative electrode for further improving the output characteristics of the battery. However, the excessive amount of the solid electrolyte in the negative electrode mixture decreases the amounts of other components and may decrease the effects of these components. Thus, the content of the solid electrolyte in the negative electrode mixture is preferably 130 parts by mass or less, and much preferably 100 parts by mass or less, with respect to 100 parts by mass of the content of the negative electrode active material.

A current collector may be added to the negative electrode that includes the negative electrode mixture molded body. The current collector may be: a foil, a punched metal, a net, an expanded metal, or a metal foam made of copper or nickel; or a carbon sheet.

The negative electrode mixture molded body can be formed by, for example, mixing the negative electrode active material with the conductive assistant, the solid electrolyte, the binder, etc., which are added as necessary, to prepare a negative electrode mixture, and compressing the negative electrode mixture by, e.g., pressure molding. The negative electrode that is constituted by only the negative electrode mixture molded body can be manufactured using this method.

If the current collector is added to the negative electrode, the negative electrode can be manufactured by sticking the negative electrode mixture molded body formed using such a method as described above, to the current collector by, e.g., pressure joining.

The negative electrode mixture molded body may be formed by mixing the above negative electrode mixture with a solvent to prepare a negative electrode mixture-containing composition, applying the composition on a substrate such as the current collector or the solid electrolyte layer that will face the negative electrode, drying the applied composition, and then pressing the dried composition.

The solvent of the negative electrode mixture-containing composition may be water or an organic solvent such as NMP. However, if the solid electrolyte is also added to the negative electrode mixture-containing composition, a solvent that is less likely to degrade the solid electrolyte is desirable. The various solvents that have been exemplified above as the solvents for the positive electrode mixture-containing composition to which the solid electrolyte is added are preferable.

It is much preferable to compressively mold the negative electrode mixture by, e.g., pressure molding to form the negative electrode mixture molded body, in view of the increase in the density of the molded body for the decrease in the porosity and the resulting further decrease in the internal resistance of the negative electrode.

Although the thickness of the negative electrode mixture molded body is ordinarily 50 $\mu$m or more, the thickness is preferably 200 $\mu$m or more in view of the increase in the capacity of the battery. The thickness of the negative electrode mixture molded body is ordinarily 1000 $\mu$m or less. The thickness is preferably 500 $\mu$m or less in view of the further improvement in the load characteristics of the battery.

The negative electrode may be manufactured by forming the negative electrode mixture layer composed of the negative electrode mixture molded body on the current collector using the negative electrode mixture-containing composition to which the solvent is added. In this case, the thickness of the negative electrode mixture layer is preferably 50 to 1000 $\mu$m, and much preferably 500 $\mu$m or less, in view of the further improvement in the load characteristics of the battery.

If the negative electrode includes a lithium sheet or a lithium alloy sheet, these sheets may be used alone or stuck to the current collector.

Examples of alloy elements for the lithium alloy include aluminum, lead, bismuth, indium, and gallium, but aluminum and indium are preferable. The proportion of the alloy element (or the proportion of the total of the alloy elements if the lithium alloy includes a plurality of the alloy elements) in the lithium alloy is preferably 50% by atom or less (in this case, the remainder is lithium and unavoidable impurities).

The negative electrode that includes the lithium alloy sheet may be formed by stacking an alloy element-including layer for formation of a lithium alloy, on the surface of a lithium layer that is constituted by, e.g., a metal lithium foil (lithium-including layer) by, e.g., pressure joining, to form a stacked body, and making the stacked body in contact with a solid electrolyte in the battery to form a lithium alloy on the surface of the lithium layer. In such a negative electrode, the stacked body may include the alloy element-including layer on only one side or on both sides of the lithium layer. The stacked body can be formed by, e.g., joining a metal lithium foil to an alloy element foil by pressure joining.

The current collector may be added to the negative electrode that is produced by forming the lithium alloy in the battery. In this case, the stacked body may include the lithium layer on one side of the negative electrode current collector, and may include the alloy element-including layer on the side of the lithium layer opposite the negative electrode current collector, or the stacked body may include the lithium layer on each side of the negative electrode current collector, and may include the alloy element-including layer on the side of each lithium layer opposite the negative electrode current collector. The negative electrode current collector and the lithium layer (metal lithium foil) may be stacked on top of each other by, e.g., pressure joining.

The alloy element-including layer of the stacked body used as the negative electrode may be a foil constituted by the alloy element(s). The thickness of the alloy element-including layer is preferably 1 $\mu$m or more, and much preferably 3 $\mu$m or more, and also preferably 20 $\mu$m or less, and much preferably 12 $\mu$m or less.

The lithium layer of the stacked body used as the negative electrode may be a metal lithium foil. The thickness of the lithium layer is preferably 0.1 to 1.5 mm. Further, the thickness of the lithium sheet or the lithium alloy sheet of the negative electrode is also preferably 0.1 to 1.5 mm.

If the current collector is added to the negative electrode that includes the lithium sheet or the lithium alloy sheet, the current collector may be the above-exemplified current collector that can be used for the negative electrode that includes the negative electrode mixture molded body.

As described above, a bipolar electrode may be produced by forming the positive electrode mixture molded body (positive electrode mixture layer) on one side of the current collector using such a technique as described above, and forming the negative electrode mixture molded body (negative electrode mixture layer) on the other side of the current collector using such a method as described above or sticking, e.g., a lithium sheet or a lithium alloy sheet on the other side of the current collector. The positive electrode and the negative electrode may be formed on the current collector in this order, or vice versa.

(Solid electrolyte layer)

When the battery is an all-solid-state secondary battery, specific examples of a solid electrolyte that can constitute the solid electrolyte layer of the battery (the solid electrolyte layer that is interposed between the positive electrode and the negative electrode, the solid electrolyte layer that is interposed between the bipolar electrodes, or the solid electrolyte layer that is interposed between the bipolar electrode and the typical positive electrode or between the bipolar electrode and the typical negative electrode) include the above-exemplified solid electrolytes that can be contained in the positive electrode mixture. Among the above-exemplified solid electrolytes, the sulfide-based solid electrolytes are preferable, and the sulfide-based solid electrolytes that have the argyrodite crystal structure are much preferable because they have a high lithium ion conductivity and have a function of increasing the moldability of the negative electrode mixture.

The solid electrolyte layer may include a porous body such as a nonwoven fabric made of resin, as a support.

The solid electrolyte layer may be formed using a method in which the solid electrolyte is compressed by, e.g., pressure molding, or a method in which the solid electrolyte is dispersed in a solvent to prepare a composition for forming the solid electrolyte layer, the composition is applied on a substrate, the positive electrode, or the negative electrode, the applied composition is dried, and the dried composition is subjected to pressure molding such as pressing, as necessary. Among them, the method in which the solid electrolyte is compressed is preferable.

A solvent that is less likely to degrade the solid electrolyte is desirably used for the composition for forming the solid electrolyte layer. The various solvents that have been exemplified above as the solvents for the positive electrode mixture-containing composition to which the solid electrolyte is added are preferable.

The thickness of the solid electrolyte layer is preferably 10 to 200 μm.

(Separator)

When the battery is a non-aqueous electrolyte secondary battery except an all-solid-state secondary battery, the separator (the separator that is interposed between the positive electrode and the negative electrode, the separator that is interposed between the bipolar electrodes, or the separator that is interposed between the bipolar electrode and the typical positive electrode or between the bipolar electrode and the typical negative electrode) desirably has a sufficient strength and can hold much non-aqueous electrolyte. In view of this, the separator is preferably, e.g., a microporous film or a nonwoven fabric that has a thickness of 10 to 50 μm and an aperture ratio of 30 to 70%, and includes polyethylene, polypropylene, or ethylene-propylene copolymers.

(Non-aqueous electrolyte)

When the battery is a non-aqueous electrolyte secondary battery except an all-solid-state secondary battery, the non-aqueous electrolyte ordinarily is a non-aqueous liquid electrolyte (non-aqueous electrolyte solution). The non-aqueous electrolyte solution includes an organic solvent, and an electrolyte salt such as a lithium salt that is dissolved in the organic solvent. Examples of the organic solvent include but are not limited to: chain esters such as dimethyl carbonate, diethyl carbonate, ethyl methyl carbonate, and methyl propyl carbonate; cyclic esters with a high dielectric constant such as ethylene carbonate, propylene carbonate, butylene carbonate, and vinylene carbonate; and mixed solvents of chain esters and cyclic esters. Among them, a mixed solvent of chain esters as the main solvent and cyclic esters is particularly suitable.

Examples of the electrolyte salt to be dissolved in the organic solvent in preparing the non-aqueous electrolyte solution include $LiPF_6$, $LiBF_4$, $LiAsF_6$, $LiSbF_6$, $LiCF_3SO_3$, $LiC_4F_9SO_3$, $LiCF_3CO_2$, $Li_2C_2F_4(SO_3)_2$, $LiC_nF_{2n+1}SO_3$ (n ≥ 2), $LiN(RfSO_2)(RfSO_2)$, $LiC(RfSO_2)_3$, and $LiN(RfOSO_2)_2$ (where Rf and Rf are each a fluoroalkyl group). These electrolyte salts may be used individually or in combination of two or more. The concentration of the electrolyte salt in the electrolyte solution is not limited but is preferably 0.3 mol/L or more, and much preferably 0.4 mol/L or more, and also preferably 1.7 mol/L or less, and much preferably 1.5 mol/L or less.

Instead of the non-aqueous electrolyte solution, a gel-like electrolyte formed by gelling the non-aqueous electrolyte solution with a gelling agent that includes, e.g., polymer may be used as the non-aqueous electrolyte of the battery.

(Electrode body)

The positive electrode and the negative electrode are stacked on top of each other with the solid electrolyte layer or the separator interposed therebetween to form the unit electrode body. A plurality of the unit electrode bodies are stacked on top of each other to form a stacked body that is used as the battery.

When the unit electrode body that includes the solid electrolyte layer is formed, it is preferable that the positive electrode, the negative electrode, and the solid electrolyte layer that are stacked on top of each other are subjected to pressure molding, in view of the increase in the mechanical strength of the unit electrode body and the decrease in the internal resistance.

In the stacked body that includes the plurality of stacked unit electrode bodies, adjacent ones of the unit electrode bodies are connected with each other in series. Methods for connecting the unit electrode bodies with each other are not limited. However, it is preferable to connect the positive electrode of one unit electrode body with the negative electrode of another unit electrode body adjacent to the unit electrode body with a current collector that is interposed between the two unit electrode bodies, as illustrated in FIG. 1.

The current collector that is interposed between the unit electrode bodies may be: a foil, a punched metal, a net, an expanded metal, or a metal foam that is made of metal, such as copper, nickel, or iron, that does not react with Li or made of an alloy (that includes stainless steel) that contains the metal; or a carbon sheet. The current collector that is interposed between the unit electrode bodies preferably has a thickness of 10 to 200 $\mu$m.

The current collector may be only put on the adjacent unit electrode body, or may be integrated with the unit electrode body by, e.g., sticking the current collector to the adjacent positive electrode or negative electrode.

The battery includes a plurality of the unit electrode bodies, such as two, three, or four unit electrode bodies, but typically includes ten or less unit electrode bodies.

As described above, the battery that includes a bipolar electrode is in the form of a stacked electrode body in which the bipolar electrode, the typical positive electrode, and the typical negative electrode are stacked on top of each other with the solid electrolyte layer or the separator interposed between the bipolar electrode and the typical positive electrode or between the bipolar electrode and the typical negative electrode. When the battery includes a plurality of bipolar electrodes, the battery is in the form of a stacked electrode body in which the bipolar electrodes are stacked on top of each other with the solid electrolyte layer or the separator interposed also between the bipolar electrodes. The battery includes at least one bipolar electrode and may include two, three, or four bipolar electrodes, but typically includes ten or less bipolar electrodes.

(Exterior body)

The exterior body of the battery is, e.g., a battery container that includes the exterior can and the sealing can. That is, such a battery that includes the battery container as the exterior body is a flat battery.

In the battery industry, the flat battery that has a diameter that is larger than the height is referred to as a coin-shaped battery or a button-shaped battery. There is no clear distinction between the coin-shaped battery and the button-shaped battery. If a battery of an aspect of the present invention is a flat battery, the battery includes both the coin-shaped battery and the button-shaped battery.

If the exterior body of the battery is a battery container that includes the exterior can and the sealing can, the opening may be sealed by crimping the exterior can and the sealing can with the gasket interposed therebetween as illustrated in FIG. 1. Alternatively, the exterior can and the sealing can may be stuck to each other with resin.

The exterior can and the sealing can may be made of, e.g., stainless steel. The gasket may be made of, e.g., polypropylene or nylon. Moreover, when heat resistance is required in relation to the intended use of the battery, the gasket may be made of heat-resistant resin with a melting point of more than 240°C such as: a fluorocarbon resin, e.g., a tetrafluoroethylene-perfluoroalkoxyethylene copolymer (PFA); polyphenylene ether (PEE); polysulfone (PSF); polyarylate (PAR); polyether sulfone (PES); polyphenylene sulfide (PPS); and polyether ether ketone (PEEK). Further, when the intended use of the battery requires heat resistance, the opening may be sealed by a glass hermetic seal.

The shape of the exterior body constituted by the battery container that includes the exterior can and the sealing can may be circular or polygonal, e.g., quadrangular (square or rectangular) in a plan view. In the case of the polygonal shape, the corners may be curved.

The exterior body of the battery may be a laminating film exterior body constituted by a metal laminating film such as an aluminum laminating film.

[Method for using battery and battery system]

A battery system of an aspect of the present invention includes a battery of an aspect of the present invention and a charger. The battery includes a plurality of unit electrode bodies. The charger charges the battery so that a ratio of $Q_{obs}$ to $Q_{the}$: $(Q_{obs}/Q_{the}) \times 100$ is 60% or more, and preferably 65% or more, and also 90% or less, and preferably 85% or less in the unit electrode bodies, where $Q_{obs}$ represents a charging capacity per mass of an active material of electrodes of the unit electrode bodies that contain a material having the spinel structure or a material having the olivine structure as the active material, and $Q_{the}$ represents a theoretical capacity of the electrodes. The system allows the battery to exhibit good load characteristics and charge-discharge cycle characteristics.

In a method for using a battery of an aspect of the present invention, the battery of an aspect of the present invention is charged so that $(Q_{obs}/Q_{the}) \times 100$ is 60% or more, and preferably 65% or more, and also 90% or less, and preferably 85% or less, and used. The using method allows the battery to exhibit good load characteristics and charge-discharge cycle characteristics.

To regulate $(Q_{obs}/Q_{the}) \times 100$ within the above values, the system adjusts a charging cutoff voltage (the upper limit of the voltage that is applied by the charger) according to the configuration of the battery used. For example, when the battery includes a stacked body of two unit electrode bodies connected in series, each of which includes a positive electrode containing a lithium cobalt oxide as a positive electrode active material and a negative electrode containing a lithium titanium oxide as a negative electrode active material, as will be described in the Examples below, the specific charging cutoff voltage is typically 5.4 V or less, and also preferably 4.8 V or more.

It is sufficient if the charger of the system can charge the battery under the cutoff conditions. Examples of the charger include conventional battery chargers, such as a charger that includes a publicly known controller that can adjust the current value and the voltage, and can perform constant-current charging and subsequently constant-voltage charging, and a charger that includes a publicly known controller that can adjust the current value and the voltage, and can perform pulse charging.

Examples

Hereinafter, the present invention is described in detail by way of the Examples. However, it should be noted that the Examples given below are not intended to limit the scope of the present invention.

Example 1

<Formation of solid electrolyte layer>

A sulfide-based solid electrolyte $Li_{7-h}PS_{6-h}Cl_iBr_j$ (where $h = i + j$, $0 < h \leq 1.8$, and $0.1 \leq i/j \leq 10.0$) having the argyrodite crystal structure and an average particle size of 4 $\mu$m was fed into a powder-molding mold, and molded under pressure with a pressing machine to form a solid electrolyte layer with a thickness of 0.1 mm.

<Production of positive electrode>

Powder of $LiCoO_2$ as a positive electrode active material constituted by primary particles having an average particle size of 5 $\mu$m, the sulfide-based solid electrolyte used for the solid electrolyte layer, and carbon nanotubes "VGCF" (product name) manufactured by Showa Denko K.K. as the conductive assistant were mixed at a mass ratio of 62:34:4 and kneaded well to prepare a positive electrode mixture. Next, 28 mg of the positive electrode mixture was fed onto the solid electrolyte layer in the powder-molding mold, and molded under pressure with the pressing machine to form a positive electrode that was constituted by a positive electrode mixture molded body having a thickness of 0.25 mm, on the solid electrolyte layer.

<Production of negative electrode>

$Li_4Ti_5O_{12}$ having an average particle size of 5 $\mu$m, the sulfide-based solid electrolyte used for the solid electrolyte layer, and the carbon nanotubes used for the positive electrode mixture were mixed at a mass ratio of 50:41:9 and kneaded well to prepare a negative electrode mixture. Next, 41 mg of the negative electrode mixture was fed onto a side of the solid electrolyte layer opposite the positive electrode in the powder-molding mold, and molded under pressure with the pressing machine to form a negative electrode that was constituted by a negative electrode mixture molded body having a thickness of 0.40 mm, on the solid electrolyte layer. In this way, two unit electrode bodies, each of which included the positive electrode, the solid electrolyte layer, and the negative electrode that were stacked on top of each other, were produced.

<Assembly of battery>

A flexible graphite sheet "PERMA-FOIL (product name)" manufactured by Toyo Tanso Co., Ltd. and having a thickness of 0.1 mm and an apparent density of 1.1 g/cm³ was die-cut into three pieces that had the same size as the unit electrode body. A first piece of the graphite sheet was placed on the inner bottom of a stainless-steel sealing can around which a polypropylene annular gasket was fitted. Next, a first one of the unit electrode bodies was put on the first piece of the graphite sheet with the negative electrode in contact with the graphite sheet. A second piece of the graphite sheet as a current collector was placed on the first unit electrode body. A second one of the unit electrode bodies was put on the second piece of the graphite sheet with the negative electrode in contact with the graphite sheet. Finally, the remaining piece of the graphite sheet was placed on the positive electrode of the second unit electrode body.

The sealing can was covered with a stainless-steel exterior can. Then, the opening edge of the exterior can was crimped inward to seal the opening. Consequently, an all-solid-state secondary battery that included the two unit electrode bodies that were connected with each other in series by the graphite sheets (current collectors) and had the structure illustrated in FIG. 1 was produced. FIG. 1 does not illustrate the graphite sheet placed between the sealing can and the stacked electrode bodies, and the graphite sheet placed between the exterior can and the stacked electrode bodies.

The negative electrode of each unit electrode body of the obtained all-solid-state secondary battery included the lithium titanium oxide ($Li_4Ti_5O_{12}$) as the material having the spinel structure and had $Q_{the}$ of 177 mAh.

The obtained all-solid-state secondary battery was combined with a charger that can perform constant-current charging and then constant-voltage charging to obtain an all-solid-state secondary battery system. Using the all-solid-state secondary battery system, the battery was charged by constant-current charging at a current value of 0.2 C, provided that a charging upper-limit voltage was set to 5.2 V, and subsequently charged by constant-voltage charging at the charging upper-limit voltage until the current value reached 0.02 C. As a result, $Q_{obs}$ calculated from the capacity of the battery thus charged was 112 mAh/g and $(Q_{obs}/Q_{the}) \times 100$ was 63%.

Example 2

An all-solid-state secondary battery was produced similarly as in Example 1 except changing the amounts of the positive electrode mixture to 31 mg and the negative electrode mixture to 41 mg. An all-solid-state secondary battery system was obtained similarly as in Example 1 except using the all-solid-state secondary battery. The obtained all-solid-state secondary battery system performed constant-current and constant-voltage charging similarly as in Example 1. $Q_{obs}$ determined from the capacity of the battery thus charged was 120 mAh/g, and $(Q_{obs}/Q_{the}) \times 100$ was 68%.

Example 3

An all-solid-state secondary battery was produced similarly as in Example 1 except changing the amounts of the positive electrode mixture to 35 mg and the negative electrode mixture to 38 mg. An all-solid-state secondary battery system was obtained similarly as in Example 1 except using the all-solid-state secondary battery. The obtained all-solid-state secondary battery system performed constant-current and constant-voltage charging similarly as in Example 1. $Q_{obs}$ determined from the capacity of the battery thus charged was 140 mAh/g, and $(Q_{obs}/Q_{the}) \times 100$ was 79%.

Example 4

An all-solid-state secondary battery was produced similarly as in Example 1 except changing the amounts of the positive electrode mixture to 36 mg and the negative electrode mixture to 37 mg. An all-solid-state secondary battery system was obtained similarly as in Example 1 except using the all-solid-state secondary battery. The obtained all-solid-state secondary battery system performed constant-current and constant-voltage charging similarly as in Example 1. $Q_{obs}$ determined from the capacity of the battery thus charged was 147 mAh/g, and $(Q_{obs}/Q_{the}) \times 100$ was 83%.

Example 5

An all-solid-state secondary battery was produced similarly as in Example 1 except changing the amounts of the positive electrode mixture to 39 mg and the negative electrode mixture to 35 mg. An all-solid-state secondary battery system was obtained similarly as in Example 1 except using the all-solid-state secondary battery. The obtained all-solid-state secondary battery system performed constant-current and constant-voltage charging similarly as in Example 1. $Q_{obs}$ determined from the capacity of the battery thus charged was 150 mAh/g, and $(Q_{obs}/Q_{the}) \times 100$ was 85%.

Example 6

An all-solid-state secondary battery was produced similarly as in Example 1 except changing the amounts of the positive electrode mixture to 39 mg and the negative electrode mixture to 33 mg. An all-solid-state secondary battery system was obtained similarly as in Example 1 except using the all-solid-state secondary battery. The obtained all-solid-state secondary battery system performed constant-current and constant-voltage charging similarly as in Example 1. $Q_{obs}$ determined from the capacity of the battery thus charged was 158 mAh/g, and $(Q_{obs}/Q_{the}) \times 100$ was 89%.

Comparative Example 1

An all-solid-state secondary battery was produced similarly as in Example 1 except changing the amounts of the positive electrode mixture to 25 mg and the negative electrode mixture to 43 mg. An all-solid-state secondary battery system was obtained similarly as in Example 1 except using the all-solid-state secondary battery. The obtained all-solid-state secondary battery system performed constant-current and constant-voltage charging similarly as in Example 1. $Q_{obs}$ determined from the capacity of the battery thus charged was 94 mAh/g, and $(Q_{obs}/Q_{the}) \times 100$ was 53%.

Comparative Example 2

An all-solid-state secondary battery was produced similarly as in Example 1 except changing the amounts of the positive electrode mixture to 39 mg and the negative electrode mixture to 31 mg. An all-solid-state secondary battery system was obtained similarly as in Example 1 except using the all-solid-state secondary battery. The obtained all-solid-state secondary battery system performed constant-current and constant-voltage charging similarly as in Example 1. $Q_{obs}$ determined from the capacity of the battery thus charged was 170 mAh/g, and $(Q_{obs}/Q_{the}) \times 100$ was 96%.

The all-solid-state secondary battery systems of the Examples and the Comparative Examples were subjected to the following evaluations.

<Load characteristic evaluation>

Each of the systems of the Examples and the Comparative Examples discharged the all-solid-state secondary battery that had been charged under the above conditions, by constant-current discharge at a current value of 0.1 C until the battery voltage reached 2.0 V, and the 0.02 C discharge capacity was measured. Next, each system charged the all-solid-state secondary battery under the above conditions, and subsequently discharged the battery by constant-current discharge under the same conditions as in the 0.1 C discharge capacity measurement except changing the current value to 2 C, and the 2 C discharge capacity was determined. For the battery of each system, a value is obtained by dividing the 2 C discharge capacity by the 0.1 C discharge capacity, and the value expressed as a percentage is a capacity retention rate.

<Charge-discharge cycle characteristics>

Each of the systems of the Examples and the Comparative Examples performed 500 cycles of operations that each included charging the all-solid-state secondary battery under the above conditions, and subsequently discharging the battery by constant-current discharge at a current value of 2 C until the battery voltage reached 2.0 V. For the battery of each system, a value is obtained by dividing the discharge capacity of the 500th cycle by the discharge capacity of the 1st cycle, and the value expressed as a percentage is a capacity retention rate.

Table 1 shows the values of $(Q_{obs}/Q_{the}) \times 100$ and the above-described evaluation results of the unit electrode bodies of the all-solid-state secondary batteries of the systems of the Examples and the Comparative Examples.

[Table 1]

| | $(Q_{obs}/Q_{the}) \times 100$ | Load characteristic capacity retention rate (%) | Charge-discharge cycle characteristic capacity retention rate (%) |
|---|---|---|---|
| Comp. Ex. 1 | 53 | 90 | 63 |
| Ex. 1 | 63 | 90 | 78 |
| Ex. 2 | 68 | 93 | 81 |
| Ex. 3 | 79 | 92 | 84 |
| Ex. 4 | 83 | 91 | 80 |
| Ex. 5 | 85 | 91 | 80 |
| Ex. 6 | 89 | 91 | 80 |
| Comp. Ex. 2 | 96 | 87 | 70 |
| *Example: Ex., Comparative Example: Comp. Ex. | | | |

Table 1 shows that since the systems of Examples 1 to 6 each charged the all-solid-state secondary battery under the conditions under which the value of $(Q_{obs}/Q_{the}) \times 100$ was appropriately regulated, the all-solid-state secondary battery had both the high capacity retention rate during the load characteristic evaluation and the high capacity retention rate during the charge-discharge cycle characteristic evaluation, and thus could exhibit excellent load characteristics and charge-discharge cycle characteristics.

By comparison, since the system of Comparative Example 1 charged the all-solid-state secondary battery under the conditions under which the value of $(Q_{obs}/Q_{the}) \times 100$ was excessively low, the battery had the low capacity retention rate during the charge-discharge cycle characteristic evaluation, and thus had inferior charge-discharge cycle characteristics. Since the system of Comparative Example 2 charged the all-solid-state secondary battery under the conditions under which the value of $(Q_{obs}/Q_{the}) \times 100$ was excessively high, the battery had both the low capacity retention rate during the load characteristic evaluation and the low capacity retention rate during the charge-discharge cycle characteristic evaluation, and thus had inferior load characteristics and inferior charge-discharge cycle characteristics.

The invention may be embodied in other forms without departing from the essential characteristics thereof. The embodiments disclosed in this application are to be considered in all respects as illustrative and not limitative. The scope of the invention is indicated by the appended claims rather than by the foregoing description, and all changes which come within the meaning and range of equivalency of the claims are intended to be embraced therein.

Industrial Applicability

A battery system of an aspect of the present invention is applicable to uses similar to conventionally known uses of secondary batteries (secondary battery systems).

Description of Reference Numerals

1     battery
2     unit electrode body
21    positive electrode
22    negative electrode
23    solid electrolyte layer or separator
3     exterior can
4     sealing can
5     gasket
6     current collector

**Claims**

1. A battery comprising a plurality of unit electrode bodies,

   each unit electrode body comprising: a positive electrode; a negative electrode; and a solid electrolyte layer or a separator that is interposed between the positive electrode and the negative electrode, a plurality of the unit electrode bodies being stacked on top of each other,
   wherein adjacent ones of the unit electrode bodies are connected with each other in series,
   at least one of the positive electrode and the negative electrode in the unit electrode bodies contains a material having a spinel structure or a material having an olivine structure as an active material,
   the battery is to be used in a battery system that charges the battery so that a ratio of $Q_{obs}$ to $Q_{the}$: $(Q_{obs}/Q_{the}) \times 100$ is 60 to 90% in the unit electrode bodies, where $Q_{obs}$ represents a charging capacity per mass of the active material of the at least one of the positive electrode and the negative electrode and is determined by the following formula (1), and $Q_{the}$ represents a theoretical capacity of the at least one of the positive electrode and the negative electrode and is determined by the following formula (2),

$$Q_{obs} = Q/AM \quad (1)$$

   in the formula (1), Q represents a capacity (mAh) of the battery that has been discharged at 0.02 C until a discharge lower-limit voltage is reached, charged by constant-current charging at a current value of 0.2 C until a charging upper-limit voltage is reached, and subsequently charged by constant-voltage charging at the charging upper-limit voltage until the current value reaches 0.02 C, and AM represents the mass (g) of the active material contained in the at least one of the positive electrode and the negative electrode, and

$$Q_{the} = F \times 1000/M/3600 \times N \quad (2)$$

   in the formula (2), F represents Faraday constant (A ·s/mol) of the active material contained in the at least one of the positive electrode and the negative electrode, M represents a molecular weight (g/mol) of the active material contained in the at least one of the positive electrode and the negative electrode, and N represents the number of reaction electrons of the active material contained in the at least one of the positive electrode and the negative electrode.

2. The battery according to claim 1, wherein a current collector is placed between the adjacent ones of the unit electrode bodies, and the current collector connects the adjacent ones of the unit electrode bodies with each other in series.

3. A battery comprising a stacked electrode body comprising: a plurality of positive electrodes; a plurality of negative electrodes; and solid electrolyte layers or separators that are interposed between the positive electrodes and the negative electrodes, respectively,

   wherein some of the positive electrodes and some of the negative electrodes with a current collector therebetween constitute a bipolar electrode,
   at least one of the positive electrode and the negative electrode contains a material having a spinel structure or a material having an olivine structure as an active material,
   the battery is to be used in a battery system that charges the battery so that a ratio of $Q_{obs}$ to $Q_{the}$: $(Q_{obs}/Q_{the})$ × 100 is 60 to 90%, where $Q_{obs}$ represents a charging capacity per mass of the active material of the at least one of the positive electrode and the negative electrode and is determined by the following formula (1), and $Q_{the}$ represents a theoretical capacity of the at least one of the positive electrode and the negative electrode and is determined by the following formula (2),

$$Q_{obs} = Q/AM \quad (1)$$

   in the formula (1), Q represents a capacity (mAh) of the battery that has been discharged at 0.02 C until a discharge lower-limit voltage is reached, charged by constant-current charging at a current value of 0.2 C until a charging upper-limit voltage is reached, and subsequently charged by constant-voltage charging at the charging upper-limit voltage until the current value reaches 0.02 C, and AM represents the mass (g) of the active material contained in the at least one of the positive electrode and the negative electrode, and

$$Q_{the} = F \times 1000/M/3600 \times N \quad (2)$$

   in the formula (2), F represents Faraday constant (A ·s/mol) of the active material contained in the at least one of the positive electrode and the negative electrode, M represents a molecular weight (g/mol) of the active material contained in the at least one of the positive electrode and the negative electrode, and N represents the number of reaction electrons of the active material contained in the at least one of the positive electrode and the negative electrode.

4. The battery according to any one of claims 1 to 3, wherein carriers of the active material contained in the at least one of the positive electrode and the negative electrode are lithium ions.

5. The battery according to any one of claims 1 to 3, wherein the negative electrode contains a lithium titanium oxide as the active material.

6. The battery according to any one of claims 1 to 3, wherein the negative electrode contains the material having the spinel structure as an active material, and the positive electrode contains a material that has a layered structure and is represented by general composition formula (3) described below, as an active material,

$$Li_{1+x}M^1O_2 \quad (3)$$

   in the formula (3), $M^1$ includes at least one element selected from the group consisting of Ni, Co, and Mn, and x satisfies $-0.3 \le x \le 0.3$.

7. The battery according to any one of claims 1 to 3 being an all-solid-state battery, wherein the solid electrolyte layer is interposed between the positive electrode and the negative electrode, and at least the positive electrode and the solid electrolyte layer contain a solid electrolyte.

**8.** The battery according to claim 7, wherein the negative electrode contains a solid electrolyte.

**9.** The battery according to claim 8, wherein the solid electrolyte is a sulfide-based solid electrolyte.

**10.** A battery system comprising: the battery according to any one of claims 1 to 3; and a charger, wherein the battery system charges the battery so that $(Q_{obs}/Q_{the}) \times 100$ is 60 to 90%.

**11.** A method for using the battery according to any one of claims 1 to 3, wherein the battery is charged so that $(Q_{obs}/Q_{the}) \times 100$ is 60 to 90%, and used.

FIG. 1

## INTERNATIONAL SEARCH REPORT

| International application No. |
|---|
| **PCT/JP2022/032157** |

**A. CLASSIFICATION OF SUBJECT MATTER**

*H01M 10/0585*(2010.01)i; *H01M 4/485*(2010.01)i; *H01M 4/505*(2010.01)i; *H01M 4/525*(2010.01)i; *H01M 4/62*(2006.01)i; *H01M 10/0562*(2010.01)i

FI: H01M10/0585; H01M4/485; H01M4/505; H01M4/525; H01M4/62 Z; H01M10/0562

According to International Patent Classification (IPC) or to both national classification and IPC

**B. FIELDS SEARCHED**

Minimum documentation searched (classification system followed by classification symbols)

H01M10/0585; H01M4/485; H01M4/505; H01M4/525; H01M4/62; H01M10/0562

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/193631 A1 (HITACHI CHEMICAL COMPANY, LTD.) 25 October 2018 (2018-10-25) | 1-11 |
| A | JP 2009-224309 A (NISSAN MOTOR CO LTD) 01 October 2009 (2009-10-01) | 1-11 |
| A | JP 2009-123610 A (PANASONIC CORP) 04 June 2009 (2009-06-04) | 1-11 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 September 2022** | **04 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/032157**

| Patent document cited in search report | | | Publication date (day/month/year) | Patent family member(s) | | | Publication date (day/month/year) |
|---|---|---|---|---|---|---|---|
| WO | 2018/193631 | A1 | 25 October 2018 | CN | 110537284 | A | |
| JP | 2009-224309 | A | 01 October 2009 | US | 2010/0255371 | A1 | |
| | | | | EP | 2214247 | A1 | |
| | | | | KR | 10-2010-0075533 | A | |
| | | | | CN | 101836323 | A | |
| JP | 2009-123610 | A | 04 June 2009 | US | 2010/0068628 | A1 | |
| | | | | CN | 101595592 | A | |

Form PCT/ISA/210 (patent family annex) (January 2015)

**EP 4 376 152 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004171955 A
- WO 2020070958 A
- WO 2020070955 A